# EUROPEAN PATENT SPECIFICATION

(11) **EP 2 975 786 B1**
(45) Date of publication and mention of the grant of the patent: **17.06.2020**
(21) Application number: 13877492.2
(22) Date of filing: 14.11.2013
(51) Int. Cl.: H04B 10/2543, H04B 10/556, H04J 14/00, H04J 14/04, H04J 14/06, H04B 10/61, H04B 10/2569, H04B 10/532, H04L 27/01

(54) **OPTICAL TRANSMISSION APPARATUS AND OPTICAL TRANSMISSION METHOD**
VORRICHTUNG FÜR OPTISCHE ÜBERTRAGUNG UND VERFAHREN FÜR OPTISCHE ÜBERTRAGUNG
APPAREIL ET PROCÉDÉ DE TRANSMISSION OPTIQUE

(30) Priority: 14.03.2013 WO PCT/JP2013/057174
(43) Date of publication of application: 20.01.2016
(73) Proprietor: Mitsubishi Electric Corporation, Tokyo 100-8310 (JP)
(72) Inventor: YOSHIDA, Tsuyoshi, Tokyo 100-8310 (JP); SUGIHARA, Takashi, Tokyo 100-8310 (JP); FUJIMORI, Takafumi, Tokyo 100-8310 (JP); ONOHARA, Kiyoshi, Tokyo 100-8310 (JP)
(74) Representative: Lavoix
(86) International application number: PCT/JP2013/080815
(87) International publication number: WO 2014/141536

(56) References cited:
- WO-A1-2012/070686
- JP-A- 2011 250 291
- JP-A- 2012 019 406
- US-A1- 2009 003 488
- US-A1- 2009 274 460
- US-A1- 2011 274 436
- US-A1- 2011 293 266
- LING LIU ET AL: "Initial tap setup of constant modulus algorithm for polarization de-multiplexing in optical coherent receivers", OPTICAL FIBER COMMUNICATION - INCUDES POST DEADLINE PAPERS, 2009. OFC 2009. CONFERENCE ON, IEEE, PISCATAWAY, NJ, USA, 22 March 2009 (2009-03-22), pages 1-3, XP031467724, ISBN: 978-1-4244-2606-5

## Description

### Technical Field

The present invention relates to an optical transmission apparatus and an optical transmission method, and more particularly, to an optical transmission apparatus and an optical transmission method using a digital coherent system.

### Background Art

LING LIU ET AL: "Initial tap setup of constant modulus algorithm for polarization de-multiplexing in optical coherent receivers", OPTICAL FIBER COMMUNICATION - INCUDES POST DEADLINE PAPERS, 2009. OFC 2009. CONFERENCE ON, IEEE, POSCATAWAY, NJ, USA, 22 March 2009, pages 1-3 discloses a modified constant modulus algorithm (CMA) for polarization de-multiplexing and equalization in optical coherent receivers, and designing the initial tap values for CMA.

US 2011/293266 A1 discloses an optical transmitting device and an optical receiving device for receiving an optical signal transmitted from the optical transmitting device.

US 2009/003488 discloses a transmitter of known type.

For large-capacity optical transmission, overcoming a limit in optical signal to noise power and multiplexing of high density wavelengths are problems.

As a technology for overcoming the limit in optical signal to noise power, there has heretofore been used on-off keying (OOK). However, in recent years, binary phase-shift keying (BPSK) or quaternary phase-shift keying (QPSK) has been used.

As a technology for realizing multiplexing of the high density wavelengths, a method in which polarization multiplexing is used to double the number of transmitted bits per symbol has been known. In the polarization multiplexing, independent transmission signals are assigned to two orthogonal polarization components (vertical polarization and horizontal polarization), respectively.

Moreover, as another method, a method in which, as in the QPSK and 16-quadrature amplitude modulation (QAM), signal points are increased to increase the number of transmitted bits per symbol has been known. In the QPSK and the 16QAM, in an optical transmitter, transmission signals are assigned to an in-phase axis (I axis) and a quadrature-phase axis (Q axis).

Moreover, as a transmission scheme for those optical modulation signals, a digital coherent system has gained attention (see, for example, Non Patent Literatures 1 and 2). In the digital coherent system, a synchronous detection system and digital signal processing are combined to receive those optical modulation signals. In this system, linear photoelectric conversion by means of synchronous detection and linear equalization by means of the digital signal processing are performed. The linear equalization includes fixed linear equalization, semi-fixed linear equalization, and adaptive linear equalization. In general, in a transmission path, linear waveform distortion resulting from waveform dispersion, polarization-mode dispersion (PMD), and the like occurs. In the digital coherent system, as described above, the photoelectric conversion and the linear equalization are performed, with the result that an effect of the waveform distortion may be reduced, and an excellent equalization characteristic and excellent noise immunity may be realized.

Heretofore, in the digital coherent system, the polarization-multiplexed QPSK system has mainly been used (see, for example, Non Patent Literatures 1 and 2).

### Citation List

### Non Patent Literature

[NPL 1] Optical Internetworking Forum, "100G Ultra Long Haul DWDM Framework Document", June, 2009
[NPL 2] E. Yamazaki, and 27 others, "Fast optical channel recovery in field demonstration of 100-Gbit/s Ethernet (trade mark) over OTN using real-time DSP", Optics Express, July 4, 2011, vol. 19, no. 14, p. 13179-13184
[NPL 3] C. B. Papadias, "On the existence of undesirable global minima of godard equalizers", 1997, in Proc. ICASSP 5, p. 3941-3944

### Summary of Invention

### Technical Problem

However, especially in such long-distance transmission as to exceed 3,000 km, waveform distortion due to non-linear optical effects occurs in a fiber. With methods of Non Patent Literatures 1 and 2, there has been a problem in that the effect of the waveform distortion due to the non-linear optical effects cannot be reduced, which significantly deteriorates signal quality.

The above-mentioned effect of the waveform distortion due to the non-linear optical effects is reduced in a case where polarization-multiplexed binary phase-shift keying is used as a modulation scheme. In that case, a transmission distance may be increased. However, in the polarization-multiplexed binary phase-shift keying, when a polarization splitting and adaptive equalization scheme by means of an adaptive filter based on a generally-used constant modulus algorithm (CMA) is used, there has been a problem in that the polarization splitting cannot be performed normally, or an abnormality occurs in adaptive equalization in the same polarization even when the polarizations are normally split (see, for example, Non Patent Literature 3).

The present invention has been made in order to solve the above-mentioned problems, and therefore has an object to provide an optical transmission apparatus and an optical transmission method, which have nonlinear immunity equivalent to or more than that of the polarization-multiplexed BPSK system, and are capable of performing, in a receiver, polarization splitting and adaptive equalization normally on signals that have been polarization multiplexed in a transmitter.

### Solution to Problem

The features of the optical transmitter, the optical receiver and the optical transmission method according to the present invention are defined in the independent claims, and the preferable features according to the present invention are defined in the dependent claims.

### Advantageous Effects of Invention

According to the one embodiment of the present invention, the optical transmission apparatus includes: the optical transmitter; and the optical receiver, the optical transmitter having the plurality of modulation rules, and being configured to switch the plurality of modulation rules to generate the optical signals, multiplex the optical signals with orthogonal polarizations, randomize the phases of the optical signals, and transmit the optical signals, the optical receiver including: the coherent detector for causing interference between the received optical signals and the local oscillation light to convert the optical signals into the electrical signals; the polarization splitter and adaptive equalizer for subjecting the electrical signals after the coherent detection to polarization splitting and adaptive equalization; and the differential detector for performing the differential detection on the electrical signals on which polarization splitting and adaptive equalization have been performed. Therefore, the optical transmission apparatus according to the one embodiment of the present invention has nonlinear immunity equivalent to or more than that of the polarization-multiplexed BPSK system, and is capable of performing, in the receiver, polarization splitting and adaptive equalization normally on signals that have been polarization multiplexed in the transmitter.

### Brief Description of Drawings

FIG. 1 is a block diagram for illustrating a configuration of an optical transmission apparatus according to a first embodiment of the present invention.
FIG. 2 is a diagram for illustrating a modulation rule of the optical transmission apparatus according to the first embodiment of the present invention.
FIG. 3 is a diagram for illustrating a plurality of modulation rules of the optical transmission apparatus according to the first embodiment of the present invention.
FIG. 4 is a diagram for illustrating switching of the modulation rules according to the first embodiment of the present invention.
FIG. 5 is a block diagram for illustrating a configuration of an optical transmitter of an optical transmission apparatus according to a second embodiment of the present invention.
FIG. 6 is a block diagram for illustrating a configuration of a data converter of the optical transmitter according to the second embodiment of the present invention.
FIG. 7 is a chart for showing a relationship between modulation rules and optical signals of the data converter according to the second embodiment of the present invention.
FIG. 8 is a block diagram for illustrating a configuration of an optical transmission apparatus according to a third embodiment of the present invention.
FIG. 9 is a diagram for illustrating modulation rules of the optical transmission apparatus according to the third embodiment of the present invention.
FIG. 10 is a diagram for illustrating an example of processing details in a polarization splitter and adaptive equalizer of an optical receiver according to the third embodiment of the present invention.
FIG. 11 is a diagram for illustrating characteristics of a modulation rule of the optical transmission apparatus according to the third embodiment of the present invention.
FIG. 12 is a diagram for illustrating characteristics of modulation rules of the optical transmission apparatus according to the third embodiment of the present invention.
FIG. 13 is a diagram for illustrating characteristics of a modulation rule of the optical transmission apparatus according to the third embodiment of the present invention.
FIG. 14 is a diagram for illustrating characteristics of a modulation rule of the optical transmission apparatus according to the third embodiment of the present invention.

### Description of Embodiments

Now, an optical transmission apparatus according to embodiments of the present invention is described in detail with reference to the drawings. Note that, the embodiments described below are embodiment modes of the present invention, and are not intended to limit the present invention to the scope of the embodiments.

### First Embodiment

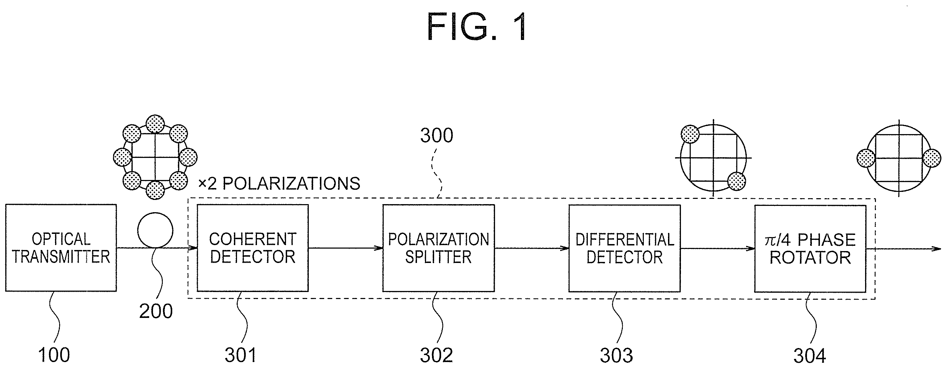

FIG. 1 is a diagram for illustrating an example of an optical transmission system using an optical transmission method according to a first embodiment of the present invention. As illustrated in FIG. 1, the optical transmission system according to the first embodiment includes an optical transmitter 100 for transmitting optical signals, an optical transmission path unit 200, which is formed of an optical fiber, for transmitting the optical signals, and an optical receiver 300 for receiving the optical signals. The optical transmission apparatus in this embodiment includes at least any one of the optical transmitter 100 and the optical receiver 300. The optical receiver 300 includes a coherent detector 301, a polarization splitter 302, a differential detector 303, and a π/4 phase rotator 304.

Now, operation of the optical transmission apparatus according to this embodiment is described.

The optical transmitter 100 combines a plurality of modulation rules to generate two optical signals, and multiplexes those optical signals with orthogonal polarizations (vertical polarization and horizontal polarization) to generate polarization-multiplexed π/4-shifted differential BPSK signals. The optical transmitter 100 outputs the polarization-multiplexed π/4-shifted differential BPSK signals to the optical transmission path unit 200.

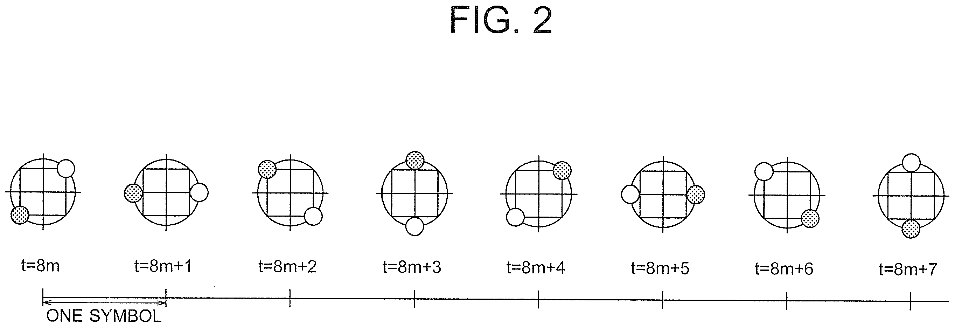

An example of a modulation rule for the π/4-shifted differential BPSK signals is illustrated in FIG. 2. In FIG. 2, the horizontal axis indicates an I axis, the vertical axis indicates a Q axis, t represents time, and m is an integer. The differential BPSK signals perform phase rotation (here in a clockwise manner) by π/4 in units of one symbol. When a phase at t=8m and a phase at t=8m+1 are compared to each other, it can be seen that the phase at t=8m+1 is rotated clockwise by π/4 with respect to the phase at t=8m. The phase is rotated by π/4 for each symbol, and hence after eight symbols, the phase is rotated by 8×(π/4)=2π to return to the original position. This is repeated. A phase difference generated in one symbol is -π/4 or +3π/4.

As described above, in this embodiment, the modulation rule subjects the optical signals to π/4 phase switching in one symbol. The reason why the phases of the optical signals are shifted by π/4 is to suppress waveform distortion due to non-linear optical effects generated in the optical fiber constructing the optical transmission path unit 200.

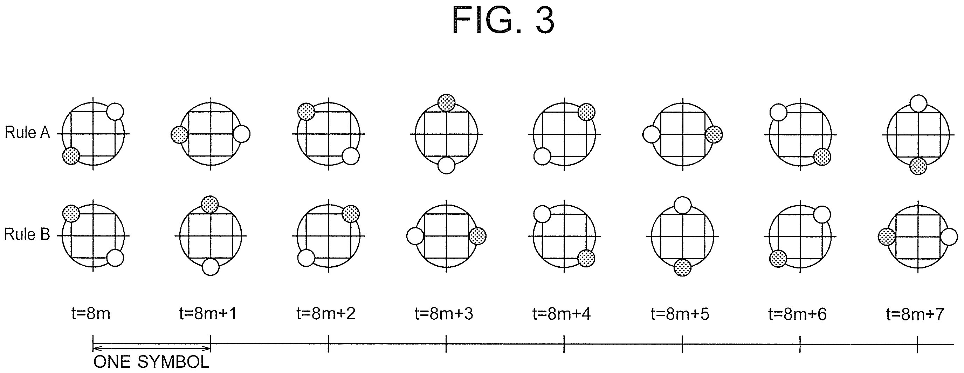

FIG. 3 is a diagram for illustrating the plurality of modulation rules in the first embodiment. In FIG. 3, Rule A is the modulation rule illustrated in FIG. 2. Rule B is an example of a modulation rule obtained by shifting phases of Rule A by π/2 in the clockwise manner. In this manner, in this embodiment, the plurality of modulation rules are prepared in advance, and the plurality of modulation rules are periodically switched for use for each of the polarizations (vertical polarization and horizontal polarization).

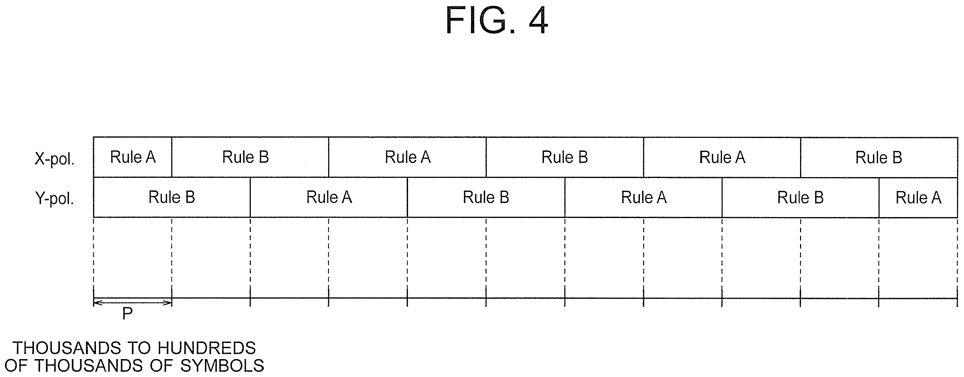

In FIG. 4, an example of a method of switching between Rule A and Rule B is illustrated. In FIG. 4, of the two orthogonal polarizations, the horizontal polarization is denoted by X-pol., and the vertical polarization is denoted by Y-pol. In X-pol., with a switching period of 2P, Rule A and Rule B are alternately repeated. In the example of FIG. 4, the first modulation rule in X-pol. is Rule A. In X-pol., thereafter, with the switching period of 2P, Rule B and Rule A are alternately repeated. Similarly, in Y-pol., with the switching period of 2P, Rule A and Rule B are alternately repeated. In the example of FIG. 4, the first modulation rule in Y-pol. is Rule B. In Y-pol., thereafter, with the switching period of 2P, Rule A and Rule B are alternately repeated. It should be noted, however, that as can be seen from FIG. 4, switching timing is shifted by a half period (by P) between X-pol. and Y-pol.

Therefore, in the example of FIG. 4, in the two orthogonal polarizations (vertical polarization and horizontal polarization), all combinations of Rule A and Rule B appear. More specifically, the following four combinations exist:
(1) X-pol. is Rule A and Y-pol. is Rule B;
(2) X-pol. is Rule A and Y-pol. is Rule A;
(3) X-pol. is Rule B and Y-pol. is Rule A; and
(4) X-pol. is Rule B and Y-pol. is Rule B.

Moreover, a probability that each of the combinations (1) to (4) appears is 1/4. Therefore, the example is illustrated in FIG. 4 that all of the combinations exist in the two orthogonal polarizations and the probabilities that the respective combinations appear are the same as each other. However, without limiting to this case, it is not always necessary to include all of the combinations.

The reason why the combinations (1) to (4) of the modulation rules are switched is to avoid abnormal convergence in the polarization splitter 302 in the receiver 300.

The combinations (1) to (4) of the modulation rules are switched with a period P in the example of FIG. 4. In other words, in the example of FIG. 4, the combinations of the modulation rules are switched for each period P in order of (1), (4), (3), (2), (1), (4), (3), (2), ···. It is preferred that the combinations of the modulation rules be switched in units of about several thousands to several hundreds of thousands of symbols (in other words, section P in FIG. 4 be set to from several thousands to several hundreds of thousands of symbols) based on a relationship with convergence time of polarization splitting processing. It is simple to set a period of switching the combinations of the modulation rules to units of optical transport unit (OTU) frames, but the combinations may be switched in longer or shorter units. Moreover, the period of switching the combinations of the modulation rules may include not only a single section but also sections of a plurality of lengths.

Moreover, in the example of FIG. 4, the number of modulation rules is two: Rule A and Rule B, but without limiting thereto, the number of modulation rules may be three or more. In a case where the number of modulation rules is three, for example, a rule in which a phase rotation amount per symbol is 3π/4 and a phase difference generated in one symbol is -3π/4 or π/4 is set as Rule C and combined with Rule A and Rule B.

As described above, the optical transmitter 100 multiplexes the optical signals, which have been generated by switching the plurality of modulation rules, with the orthogonal polarizations to generate the polarization-multiplexed π/4-shifted differential BPSK signals, and outputs the polarization-multiplexed π/4-shifted differential BPSK signals to the optical transmission path unit 200.

The optical transmission path unit 200 transmits the optical signals (polarization-multiplexed π/4-shifted differential BPSK signals), which are input from the optical transmitter 100, and outputs the optical signals to the optical receiver 300. In the π/4-shifted differential BPSK signals, as described above, carrier wave phases are shifted by π/4 in units of one symbol. Therefore, even in the case where the waveform distortion due to the non-linear optical effects occurs in the optical fiber constructing the optical transmission path unit 200, the waveform distortion may be suppressed.

In the optical receiver 300, the optical signals, which are input from the optical transmission path unit 200, are first input to the coherent detector 301.

The coherent detector 301 has a local oscillation light therein. The coherent detector 301 causes mixed interference between the optical signals, which are input from the optical transmission path unit 200, and the local oscillation light to perform photoelectric conversion in which the optical signals are converted into electrical signals. The photoelectric conversion is hereinafter referred to as "coherent detection". The coherent detector 301 outputs the electrical signals, which have been obtained by the coherent detection, to the polarization splitter 302. Note that, the electrical signals are in a state in which dual polarization I/Q-axis signals are mixed.

The polarization splitter 302 receives the electrical signals in the state in which the dual polarization I/Q-axis signals are mixed as inputs from the coherent detector 301. The polarization splitter 302 uses electrical processing to split the electrical signals into two polarizations. The polarization splitter 302 outputs the electrical signals after the polarization splitting to the differential detector 303. Note that, as the electrical processing for splitting into the two polarizations, the CMA is used, for example. Note that, the electrical signals output from the polarization splitter 302 are in the state in which the I/Q-axis signals are mixed.

In general, when an attempt is made to subject the polarization-multiplexed BPSK signals to the polarization splitting by using the CMA to make envelopes of the output signals constant, even if the envelopes become constant, erroneous convergence in which interference between the polarizations remains may occur. This is because signal constellations of the BPSK are not rotationally symmetric. This is because signal points are not arranged evenly on the I axis and the Q axis, but are arranged only on the I axis, and hence despite being orthogonal polarization signals actually, the CMA incorrectly recognizes the signals as orthogonal phase signals and pulls the signals in.

In this embodiment, the optical transmitter 100 switches the combinations of the two modulation rules having optical phases that are different by π/2 (Rule A and Rule B) illustrated in FIG. 3. When the switching timing is sufficiently fast as compared to a response speed of the CMA, the erroneous convergence of the polarization splitting does not occur. If the response speed of the CMA is about 100 kHz or less, the combinations of the modulation rules may be switched in a period of about the OTU4 frame (1 microsecond).

The differential detector 303 receives the electrical signals after the polarization splitting as inputs from the polarization splitter 302, and performs differential detection on each of the electrical signals. The electrical signals input from the polarization splitter 302 are in the state in which the I/Q-axis signals are mixed. The differential detector 303 performs the differential detection on the electrical signals by electrical processing of taking a product of a current complex electric field amplitude E(i) and a complex conjugate E*(i-1) of a complex electric field amplitude that is one symbol earlier. In reconstructing the carrier wave phase to identify data, the m-th power method is generally used. The m-th power method is a method in which, in a case where the number of phases of modulation signals is a value m, the complex electric field amplitude is raised to the m-th power to remove modulation components and extract only error components. The m-th power method requires specific processing depending on the number of phases of the modulation signals. On the other hand, in the differential detection, information is put on phase differences of the preceding and succeeding signals, which enables data identification by performing the same processing irrespective of the number of phases. Moreover, in the differential detection, phase changes that are in positive correlation with the preceding and succeeding symbols may be efficiently suppressed. The differential detector 303 outputs the electrical signals after the differential detection to the π/4 phase rotator 304. In the optical transmitter 100, the phase difference in one symbol is set to -π/4 or +3π/4, and hence the phase after the differential detection becomes -π/4 or +3π/4.

The π/4 phase rotator 304 receives the electrical signals after the differential detection as inputs from the differential detector 303. The π/4 phase rotator 304 subjects the electrical signals to the π/4 phase rotation (in a counterclockwise manner). The π/4 phase rotator 304 outputs the electrical signals after the π/4 phase rotation to the external (not shown). The electrical signals after the π/4 phase rotation have phases of 0 or π, and take binary values on the I axis, which enables signs to be identified with the Q axis being a boundary.

As described above, in this embodiment, since a π/4-shift is performed in one symbol, for example, as the modulation rules (Rule A and Rule B) illustrated in FIG. 2 and FIG. 3, immunity with respect to the non-linear optical effects of the fiber can be increased. Moreover, as illustrated in FIG. 4, the plurality of modulation rules are prepared in advance, and the modulation rules are periodically switched for each of the polarizations (vertical polarization and horizontal polarization). Thus, a signal detection sensitivity equivalent to or more than that of the differential BPSK can be obtained, and the occurrence of the erroneous convergence of the polarization splitting can be suppressed. Therefore, a transmittable distance of the digital coherent optical transmission system can be increased.

### Second Embodiment

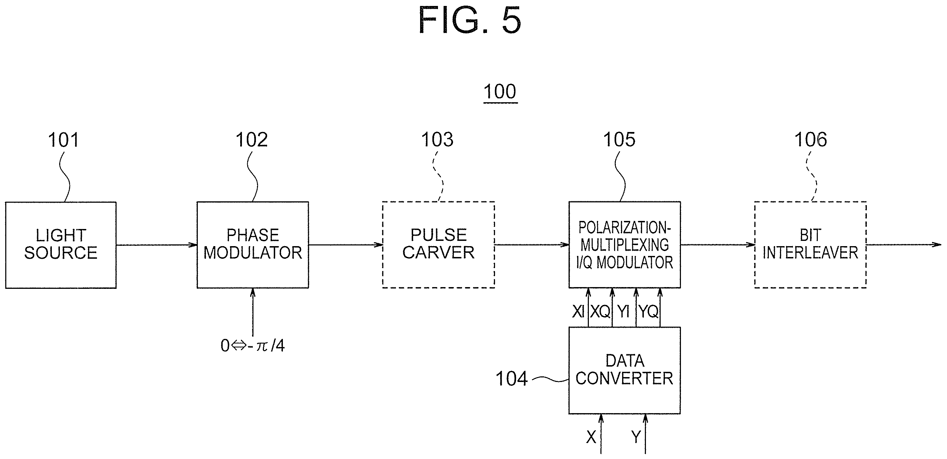

In this embodiment, an example of a configuration of the optical transmitter 100 described above in the first embodiment is described. FIG. 5 is a diagram for illustrating the configuration of the optical transmitter 100 according to this embodiment. As illustrated in FIG. 5, the optical transmitter 100 in this embodiment includes a light source 101, a phase modulator 102, a pulse carver 103, a data converter 104, a polarization-multiplexing I/Q modulator 105, and a bit interleaver 106.

Now, operation of the optical transmitter 100 according to this embodiment is described. The optical transmitter 100 combines phase modulation performed by the phase modulator 102 and data modulation performed by the polarization-multiplexing I/Q modulator 105 to generate polarization-multiplexed binary phase-shift keying signals and output the polarization-multiplexed binary phase-shift keying signals as optical transmission signals.

First, the light source 101 generates non-modulated light and outputs the non-modulated light to the phase modulator 102.

The phase modulator 102 receives the non-modulated light as an input from the light source 101. The phase modulator 102 subjects the non-modulated light to the phase modulation with electrical clock signals. At this time, an amplitude of the electrical clock signals is set to a value at which a depth of the phase modulation becomes π/4. The phase modulator 102 outputs the optical signals after the modulation to the pulse carver 103.

The pulse carver 103 receives the optical signals after the modulation as inputs from the phase modulator 102. The pulse carver 103 subjects the optical signals to pulsing modulation with the electrical clock signals. The pulse carver 103 outputs the pulsing-modulated optical signals to the polarization -multiplexing I/Q modulator 105.

The data converter 104 receives two series of data (X/Y) as inputs from the external (not shown). The data converter 104 is capable of controlling two orthogonal phases (I axis and Q axis). The data converter 104 generates four series of data (XI, XQ, YI, and YQ) based on the two series of data (X/Y) input from the external. The data converter 104 outputs the generated data series (electrical signals) to the polarization-multiplexing I/Q modulator 105.

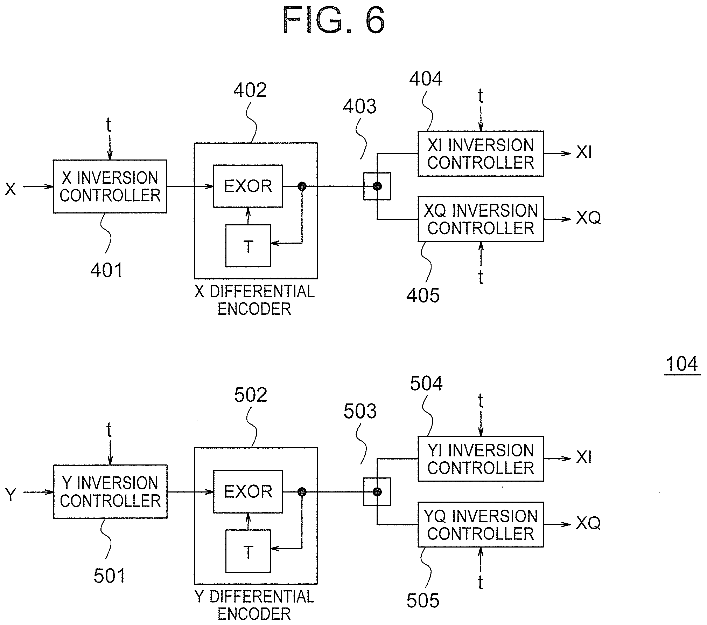

FIG. 6 is a specific configuration example of the data converter 104. The data converter 104 includes an X inversion controller 401, an X differential encoder 402, an X replicator 403, an XI inversion controller 404, an XQ inversion controller 405, a Y inversion controller 501, a Y differential encoder 502, a Y replicator 503, a YI inversion controller 504, and a YQ inversion controller 505.

Now, details of operation of the data converter 104 are described with reference to FIG. 6.

The X inversion controller 401 receives data X as an input from the external (not shown). The X inversion controller 401 performs inversion control on (performs inversion processing on or ignores) the data X depending on timing. The X inversion controller 401 outputs the data after the inversion control to the X differential encoder 402.

The X differential encoder 402 calculates an exclusive logical sum of the data input from the X inversion controller 401 and output data that has been held in the X differential encoder 402 for one clock. The X differential encoder 402 outputs a calculation result of the exclusive logical sum to the X replicator 403.

The X replicator 403 replicates the data input from the X differential encoder 402, and outputs the replicated data to the XI inversion controller 404 and the XQ inversion controller 405.

The XI inversion controller 404 performs inversion control on (performs inversion processing or ignores) the data input from the X replicator 403 depending on the timing. The XI inversion controller 404 outputs the data after the inversion control as XI lane data to the external (=polarization-multiplexing I/Q modulator 105).

The XQ inversion controller 405 performs inversion control on (performs inversion processing or ignores) the data input from the X replicator 403 depending on the timing. The XQ inversion controller 405 outputs the data after the inversion control as XQ lane data to the external (=polarization-multiplexing I/Q modulator 105).

The Y inversion controller 501 receives data Y as an input from the external (not shown). The Y inversion controller 501 performs inversion control on (performs inversion processing on or ignores) the data Y depending on the timing. The Y inversion controller 501 outputs the data after the inversion control to the Y differential encoder 502.

The Y differential encoder 502 calculates an exclusive logical sum of the data input from the Y inversion controller 501 and output data that has been held in the Y differential encoder 502 for one clock. The Y differential encoder 502 outputs a calculation result of the exclusive logical sum to the Y replicator 503.

The Y replicator 503 replicates the data input from the Y differential encoder 502, and outputs the replicated data to the YI inversion controller 504 and the YQ inversion controller 505.

The YI inversion controller 504 performs inversion control on (performs inversion processing or ignores) the data input from the Y replicator 503 depending on the timing. The YI inversion controller 504 outputs the data after the inversion control as YI lane data to the external (=polarization-multiplexing I/Q modulator 105).

The YQ inversion controller 505 performs inversion control on (performs inversion processing or ignores) the data input from the Y replicator 503 depending on the timing. The YQ inversion controller 505 outputs the data after the inversion control as YQ lane data to the external (=polarization-multiplexing I/Q modulator 105).

As described above, the data converter 104 generates the four series of data (XI, XQ, YI, and YQ) based on the two series of data (X/Y) input from the external. The four series of data (XI, XQ, YI, and YQ) are input to the polarization-multiplexing I/Q modulator 105.

The polarization-multiplexing I/Q modulator 105 receives the optical signals as inputs from the pulse carver 103. The polarization-multiplexing I/Q modulator 105 also receives the electrical signals in the XI lane, the XQ lane, the YI lane, and the YQ lane as inputs from the data converter 104. The polarization-multiplexing I/Q modulator 105 subjects the optical signals from the pulse carver 103 to the data modulation with those electrical signals. More specifically, the polarization-multiplexing I/Q modulator 105 subjects the optical signals from the pulse carver 103 to I/Q modulation for X polarization with the electrical signals in the XI lane and the electrical signals in the XQ lane, and to I/Q modulation for Y polarization with the electrical signals in the YI lane and the electrical signals in the YQ lane. Thereafter, the polarization-multiplexing I/Q modulator 105 subjects each of X-polarized components and Y-polarized components to the orthogonal polarization multiplexing. The polarization-multiplexing I/Q modulator 105 outputs the orthogonal-polarization-multiplexed optical signals to the bit interleaver 106.

The bit interleaver 106 adds arbitrary differential delays of about half a symbol between the X-polarized components and the Y-polarized components of the optical signals which is input from the polarization-multiplexing I/Q modulator 105. The bit interleaver 106 outputs the optical signals to which the differential delays have been added to the external (for example, the optical transmission path unit 200).

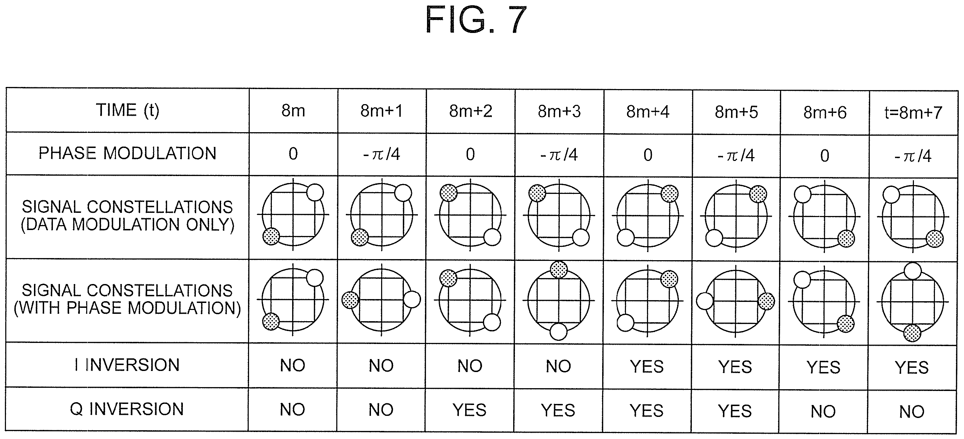

In FIG. 7, an example of a relationship among the phase modulation in the phase modulator 102, signal constellations (data modulation only) in the data converter 104, inversion control methods (I inversion and Q inversion) of the XI inversion controller 404, the XQ inversion controller 405, the YI inversion controller 504, and the YQ inversion controller 505, and signal constellations (with phase modulation) that are finally generated is shown.

A series of time is divided into eight sections (t=8m, 8m+1, 8m+2, ···, and 8m+7), and with the phase modulation in the phase modulator 102, the phases of the optical signals take 0 and -π/4 alternately. Here, at time t=8m, 8m+2, 8m+4, and 8m+6, the phase modulation in the phase modulator 102 is 0, and the phase modulation at t=8m+1, 8m+3, 8m+5, and 8m+7 is -π/4. In this manner, the phase modulator 102 performs the π/4 phase switching for each symbol.

On the other hand, the polarization-multiplexing I/Q modulator 105 is capable of controlling two orthogonal phases (I axis and Q axis), and switches modulation rules of the data modulation in units of symbols. In the example of FIG. 7, the modulation rules are switched every two symbols. In the polarization-multiplexing I/Q modulator 105, as the data modulation, in the X polarization, for example, signal points shown in the row of "signal constellations (data modulation only)" in FIG. 7 are generated separately. More specifically, at t=8m and 8m+1, the signal points are arranged in the first quadrature and the third quadrature. At t=8m+2 and 8m+3, phases are rotated by -π/2 with respect to t=8m and 8m+1 to arrange the signal points in the second quadrature and the fourth quadrature. At t=8m+4 and 8m+5, the phases are rotated by π with respect to t=8m and 8m+1 to arrange the signal points in the first quadrature and the third quadrature. At t=8m+6 and 8m+7, the phases are rotated by π/2 with respect to t=8m and 8m+1 to arrange the signal points in the second quadrature and the fourth quadrature. Also in the Y polarization, the signal points shown in the row of "signal constellations (data modulation only)" are generated separately in a similar manner.

When the phase modulation is performed on the signal points shown in the row of "signal constellations (data modulation only)" in FIG. 7 to perform 0 or -π/4 phase modulation, signal points shown in the row of "signal constellations (with phase modulation)" in FIG. 7 are generated. This corresponds to the modulation rule of Rule A illustrated in FIG. 3.

As described above, in this embodiment, as illustrated in FIG. 5, the optical transmitter 100 includes the phase modulator 102 for performing the phase modulation, the polarization-multiplexing I/Q modulator 105 for performing the data modulation, and the data converter 104 for performing the data conversion, and the phase modulation, the data modulation, and the data conversion are hierarchically combined to finally generate the signal points shown in the row of "signal constellations (with phase modulation)" in FIG. 7.

At t=8m, when it is assumed that data without I-axis inversion and Q-axis inversion is output, the I-axis inversion needs to be performed at from t=8m+4 to 8m+7, and the Q-axis inversion needs to be performed at from t=8m+2 to 8m+5. Such inversion control may be performed in the XI inversion controller 404, the XQ inversion controller 405, the YI inversion controller 504, and the YQ inversion controller 505. In this manner, the modulation rules are switched as appropriate to rotate the signal constellations in units of π/4.

As described above, in this embodiment, as shown in FIG. 7, the modulation rules have a hierarchical structure, and have a plurality of modulation rules for each hierarchical level. Moreover, the switching timing (switching period) for the modulation rules may be set to a different value for each hierarchical level.

Note that, the modulation rules may be set individually for any one of polarizations, lanes, and frames, or individually for all of the polarizations, lanes, and frames. In other words, it is allowed to have different modulation rules according to the polarizations, lanes, and frames.

Further, the switching timing (switching period) for the modulation rules may be set individually for any one of polarizations, lanes, and frames, or individually for all of the polarizations, lanes, and frames. In other words, it is allowed to have different switching periods according to the polarizations, lanes, and frames.

Note that, the pulsing modulation in the pulse carver 103 and the addition of the differential delays between the orthogonal polarizations in the bit interleaver 106 are additional functions for further reducing the waveform distortion due to the non-linear optical effects in the fiber, and are not elements necessary for this embodiment. Therefore, the pulse carver 103 and the bit interleaver 106 need not necessarily be included.

At a timing for transmitting and receiving data other than payload, such as a pattern for synchronizing frames, it is also possible to switch to a corresponding modulation rule separately.

As described above, in this embodiment, the specific configuration of the optical transmitter for artificially generating polarization-multiplexed π/4-shifted differential BPSK optical signals by combining the phase modulation and the data modulation has been described. It has also been described that four lanes of data XI, XQ, YI, and YQ for the data modulation can be generated by combining the differential encoding and the replication of the data and the switching of the modulation rules by the inversion control.

### Third Embodiment

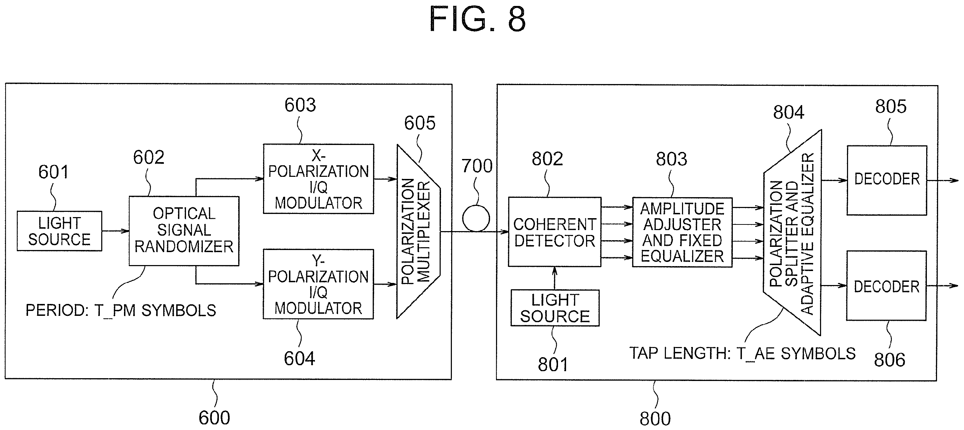

FIG. 8 is a diagram for illustrating an example of an optical transmission apparatus using an optical transmission method according to a third embodiment of the present invention. As illustrated in FIG. 8, the optical transmission system according to the third embodiment includes an optical transmitter 600 for transmitting optical signals, an optical transmission path unit 700, which is formed of an optical fiber, for transmitting the optical signals, and an optical receiver 800 for receiving the optical signals. The optical transmission apparatus in this embodiment includes at least any one of the optical transmitter 600 and the optical receiver 800. The optical transmitter 600 includes a light source 601, an optical signal randomizer 602, I/Q modulators 603 and 604 for two systems (X polarization and Y polarization), and a polarization multiplexer 605. The optical receiver 800 includes a light source 801, a coherent detector 802, an amplitude adjuster and fixed equalizer 803, a polarization splitter and adaptive equalizer 804, and decoders 805 and 806 for the two systems (X polarization and Y polarization).

Now, operation of the optical transmission system according to this embodiment is described.

The light source 601 in the optical transmitter 600 generates non-modulated light and outputs the non-modulated light to the optical signal randomizer 602. The optical signal randomizer 602 randomizes the non-modulated light input from the light source 601. For example, the phase modulation is performed by using clock signals having a frequency that is about 1/10th of a baud rate so as to randomize the non-modulated light, which is output to the X-polarization I/Q modulator 603 and the Y-polarization I/Q modulator 604. The X-polarization I/Q modulator 603 performs BPSK modulation or π/2-shifted BPSK modulation on the randomized optical signals input from the optical signal randomizer 602, and outputs the optical signals to the polarization multiplexer 605. The Y-polarization I/Q modulator 604 performs BPSK modulation or π/2-shifted BPSK modulation on the randomized optical signals input from the optical signal randomizer 602, and outputs the optical signals to the polarization multiplexer 605. The polarization multiplexer 605 subjects the optical signals input from the X-polarization I/Q modulator 603 and the optical signals input from the Y-polarization I/Q modulator 604 to the orthogonal polarization multiplexing, and outputs the optical signals to the optical transmission path unit 700.

The optical transmission path unit 700 transmits the optical signals, on which the orthogonal polarization multiplexing has been performed by the polarization multiplexer 605 in the optical transmitter 600, and outputs the optical signals to the coherent detector 802 in the optical receiver 800.

The light source 801 in the optical receiver 800 generates non-modulated light, which oscillates at a frequency that approximately matches that of the optical signals generated by the light source 601 in the optical transmitter 600, and outputs the non-modulated light to the coherent detector 802. The coherent detector 802 causes interference between the optical signals input from the optical transmission path unit 700 and the non-modulated light input from the light source 801 in units of orthogonal polarizations (Xr/Yr) and in units of orthogonal phases (Ir/Qr), and photoelectrically converts and amplifies the optical signals into four lanes of electrical signals: Xrlr, XrQr, Yrlr, and YrQr. The coherent detector 802 further subjects the electrical signals to analog-to-digital conversion to obtain digital signals, and outputs the digital signals to the amplitude adjuster and fixed equalizer 803. The amplitude adjuster and fixed equalizer 803 performs fixed equalization for waveform dispersion or the like, which has occurred in the optical transmission path unit 700, on the four lanes of digital signals input from the coherent detector 802, performs amplitude adjustment on the four lanes of signals, and outputs each of the four lanes of signals to the polarization splitter and adaptive equalizer 804. The polarization splitter and adaptive equalizer 804 performs orthogonal polarization splitting and adaptive equalization using a CMA algorithm, for example, based on the four-lane signals input from the amplitude adjuster and fixed equalizer 803, and outputs the signals, on which the polarization splitting and the adaptive equalization have been performed, to the decoders 805 and 806 in units of each polarization. The decoder 805 receives the X-polarized signals on a transmission side, on which the polarization splitting has been performed, for example, as inputs from the polarization splitter and adaptive equalizer 804, decodes the X-polarized signals, and outputs a decoding result to the external (not shown). The decoder 806 receives the Y-polarized signals on the transmission side, on which the polarization splitting has been performed, for example, as inputs from the polarization splitter and adaptive equalizer 804, decodes the Y-polarized signals, and outputs a decoding result to the external (not shown).

The BPSK modulation and the π/2-shifted BPSK modulation performed in the I/Q modulators 603 and 604 are specifically performed as follows, for example.

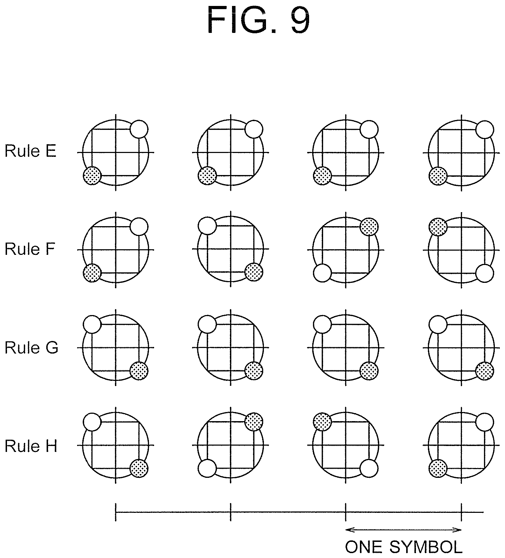

In FIG. 9, four modulation rules: Rules E, F, G, and H are illustrated. Of the four modulation rules, the modulation rule Rule E and the modulation rule Rule G are the BPSK modulation. Moreover, the modulation rule Rule F and the modulation rule Rule H are the π/2-shifted BPSK modulation. The modulation rule Rule E and the modulation rule Rule G have a phase difference of π/2. The modulation rule Rule F and the modulation rule Rule H also have a phase difference of π/2.

The modulation rules are switched according to the polarization and the frame period. The modulation rule Rule E is used for the first frame of the X polarization, the modulation rule Rule F is used for the second frame of the X polarization, the modulation rule Rule G is used for the third frame of the X polarization, and the modulation rule Rule H is used for the fourth frame of the X polarization. Similarly, the modulation rule Rule G is used for the first frame of the Y polarization, the modulation rule Rule F is used for the second frame of the Y polarization, the modulation rule Rule E is used for the third frame of the Y polarization, and the modulation rule Rule H is used for the fourth frame of the Y polarization.

In other words, the BPSK modulation is used for the odd frames, and the π/2-shifted BPSK modulation is used for the even frames. In addition, the optical phases are changed by π/2 in the second and third frames in the X polarization, and the optical phases are changed by π/2 in the first and second frames in the Y polarization. In this manner, the phase relationship among the four frames is randomized to avoid the erroneous convergence of the polarization splitting in the polarization splitter and adaptive equalizer 804.

Note that, the BPSK modulation may be DPBSK modulation to which the differential encoding is applied.

The amplitude adjuster and fixed equalizer 803 performs the amplitude adjustment in units of the lanes. When pure BPSK signals are input, a case where signal points are arranged only in the Ir lane on a complex plane, and there is no signal points in the Qr lane may occur, for example. When amplitude unification control is performed on each of the all lanes respectively, even though the state in which there are no signal points in the Qr lane is correct, the amplitude is forcedly increased, which may excessively enhance noise.

Here, when an observation is made by performing the above-mentioned switching of the modulation rules to average at least four frames, no incident of unbalanced arrangement of the signal points in the Ir lane or the Qr lane on the complex plane occurs. This enables correct amplitude detection in each of the four lanes on the reception side, and the amplitude unification control can be performed.

Such amplitude adjustment is also performed in the coherent detector 802. However, in a case where at least four frames are averaged so as to detect the amplitude, the correct amplitude detection and the amplitude unification control can be realized.

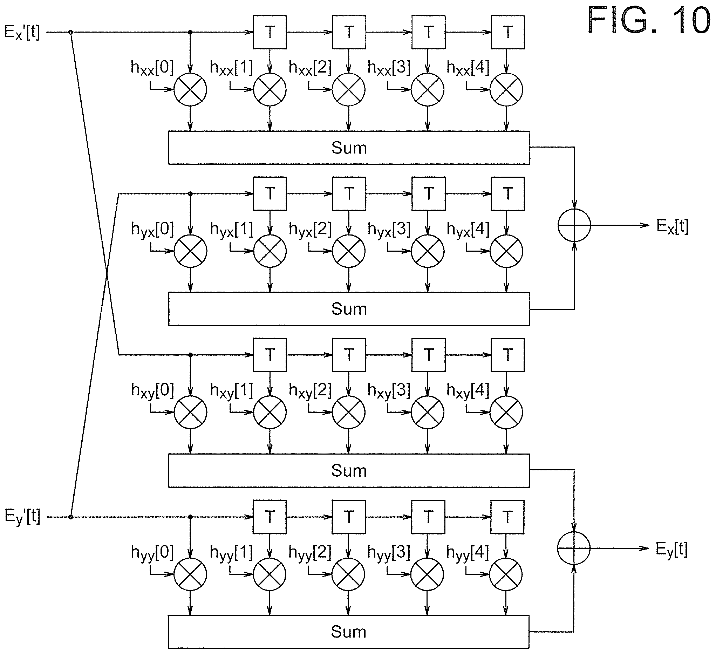

An example of processing details in the polarization splitter and adaptive equalizer 804 is illustrated in FIG. 10. The example illustrated in FIG. 10 is a butterfly-type finite impulse response (FIR) filter. The polarization splitter and adaptive equalizer 804 uses the FIR filter illustrated in FIG. 10 to split Xr-polarized complex signals Ex'[t] and Yr-polarized complex signals Ey'[t] into X-polarized components Ex[t] and Y-polarized components Ey[t], which are dual polarization components at the time of transmission. Here, the Xr-polarized complex signals Ex'[t] are complex signals containing Xrlr as a real part and XrQr as an imaginary part, of the four-lane signals input from the amplitude adjuster and fixed equalizer 803. Similarly, the Yr-polarized complex signals Ey'[t] are complex signals containing Yrlr as a real part and YrQr as an imaginary part, of the four-lane signals input from the amplitude adjuster and fixed equalizer 803. In general, a delay length for one tap of the FIR filter is designed to be a half symbol time or less, and a tap length is designed to be 10 or more, but in FIG. 10, for simplification of the figure, the delay length for one tap is illustrated as one symbol, and the tap length is illustrated as 5. A tap coefficient hpq[k] (p={x, y}, q={x, y}, and k={0, 1, 2, 3, 4}) of the FIR filter is sequentially updated by an adaptive algorithm such as the CMA.

As described above, when the CMA is applied to unbalanced signals (without 90-degree rotation symmetry) on the complex plane such as in the BPSK with the tap length of the FIR filter being 2 or more, even in a case where the orthogonal polarization splitting is performed normally, intersymbol interference may remain in the same polarization.

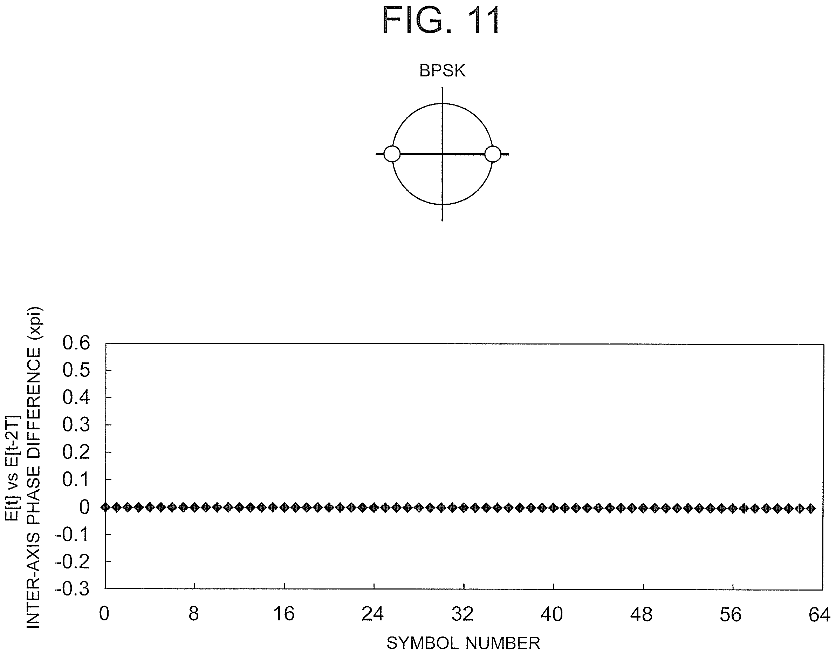

In FIG. 11, for the BPSK signals, a difference in phases of the axes, on which the signal points are arranged, between the complex signals E[t] at one time point and the complex signals E[t-2T] at a time point that is two symbols apart from the time point is illustrated (hereinafter referred to as "inter-axis phase difference"). In simple BPSK signals, E[t]={1, -1} and E[t-2T]={1, -1}, the axis on which the signal points are arranged is always 0 degrees (180 degrees), and hence the inter-axis phase difference is always 0. Therefore, in a case where E[t] and E[t-2T] are quadrature multiplexed as in cosθ·E[t]+j·sinθ·E[t-2T] (j: imaginary unit), for example, an amplitude value r thereof is fixed at r=1 irrespective of θ. This means that whether or not there is a response from a symbol that is two symbols apart cannot be detected by the CMA, and that the FIR filter, which is originally intended to be used for waveform equalization, generates delay interference to the contrary and becomes a cause to destabilize performance. With the pure BPSK signals, without limiting to the symbols that are two symbols apart, the above-mentioned problem may occur to all symbols that are apart by an integer number of symbols, such as one symbol or three symbols.

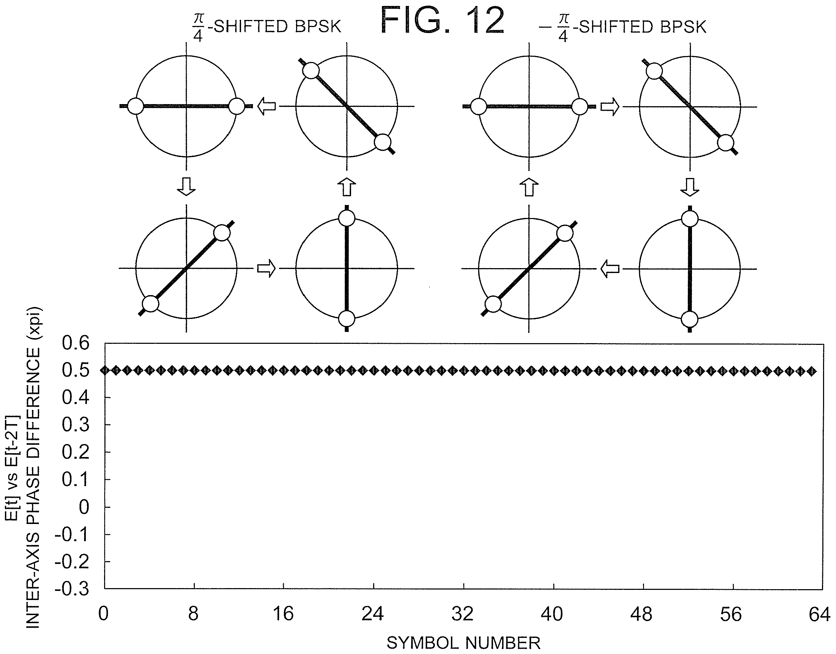

In FIG. 12, a similar analysis is performed on π/4-shifted BPSK signals and -π/4-shifted BPSK signals.

The inter-axis phase difference from a signal that is two symbols apart is π/2 for both cases. Therefore, in a case where E[t] and E[t-2T] are in-phase multiplexed as in cosθ·E[t]+sinθ·E[t-2T], for example, an amplitude value r thereof is fixed at r=1 irrespective of θ. This means that whether or not there is a response from a symbol that is two symbols apart cannot be detected by the CMA, and that the FIR filter, which is originally intended to be used for the waveform equalization, generates delay interference to the contrary and becomes a cause to destabilize performance. This problem also occurs to symbols that are apart by 2+4n symbols (n: integer of 0 or more), such as six symbols or ten symbols, without limiting to the two symbols.

The inter-axis phase difference from a signal that is 4+4n symbols (n: integer of 0 or more) apart, such as four symbols, eight symbols, or twelve symbols, is 0 for all cases. Therefore, in a case where E[t] and E[t-2T] are quadrature multiplexed as in cosθ·E[t]+j·sinθ·E[t-2T] (j: imaginary unit), for example, an amplitude value r thereof is fixed at r=1 irrespective of θ. This means that whether or not there is a response from a symbol that is 4+4n symbols apart cannot be detected by the CMA, and that the FIR filter, which is originally intended to be used for the waveform equalization, generates delay interference to the contrary and becomes a cause to destabilize performance.

The inter-axis phase difference from the signal that is 1+4n symbols (n: integer of 0 or more) apart is π/4 or -π/4. In a case where E[t] and E[t-2T] are multiplexed while being adjusted by the phase difference of ±π/4 as in cosθ·E[t] + sinθ·exp(jπ/4)E[t-2T] or cosθ·E[t] + sinθ·exp(-jπ/4)E[t-2T], an amplitude value r thereof is fixed at r=1 irrespective of θ.

The inter-axis phase difference from the signal that is 3+4n symbols (n: integer of 0 or more) apart is -π/4 or π/4. In a case where E[t] and E[t-2T] are multiplexed while being adjusted by the phase difference of ± π/4 as in cosθ·E[t] + sinθ·exp(-jπ/4)E[t-2T] or cosθ·E[t] + sinθ·exp(jπ/4)E[t-2T], an amplitude value r thereof is fixed at r=1 irrespective of θ.

Here, when the π/4-shifted BPSK signals and the -π/4-shifted BPSK signals are switched for each frame, for example, the inter-axis phase difference from the signal that is odd symbols apart becomes not fixed, and the multiplexing condition that r should be always constant is eliminated. As a result, the delay interference does not occur. It should be noted, however, that the inter-axis phase difference from the signal that is even symbols apart is still fixed, and in a case of the in-phase multiplexing with a symbol that is 2+4n symbols (n: integer of 0 or more) apart, or a case of quadrature multiplexing with a symbol that is 4+4n symbols (n: integer of 0 or more) apart, the occurrence of the delay interference cannot be avoided.

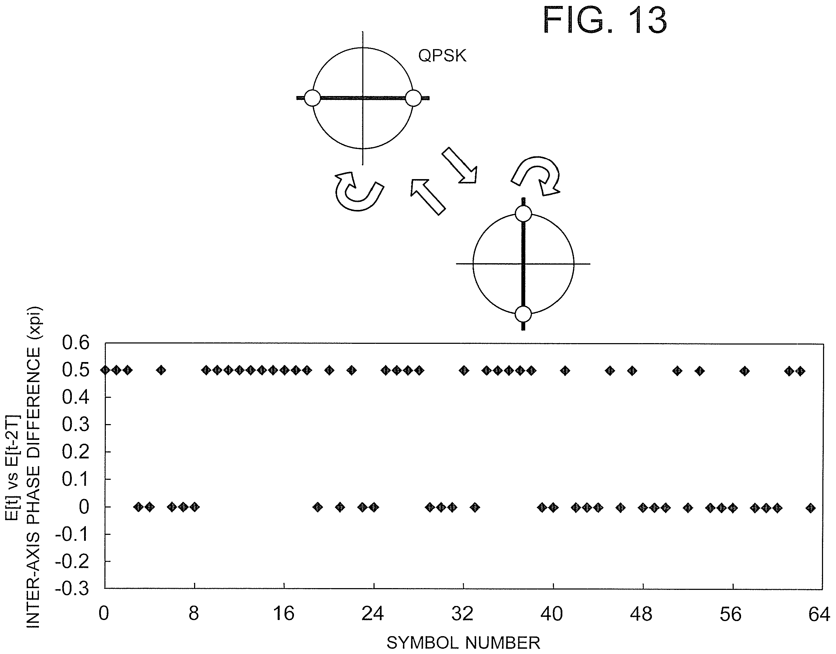

In FIG. 13, a similar analysis is performed on QPSK signals. The QPSK signals can be understood to randomly change in axis on which the signal points are arranged according to data. Therefore, the inter-axis phase difference is randomly 0 or π/2. Therefore, the amplitude r does not become constant in the condition in which the delay interference occurs, and does not converge to the condition in which the delay interference occurs even when the CMA is used.

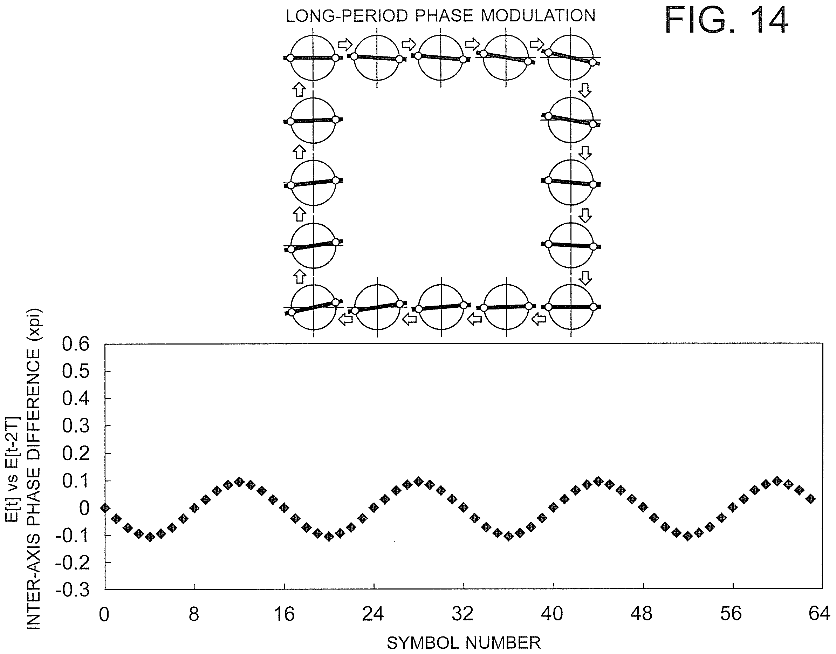

In FIG. 14, long-period sine-wave clock-phase modulation in a 16-symbol period and with a peak-to-peak value of π/4 is performed on the BPSK signals to perform a similar analysis on the signals obtained by randomizing phases of the optical signals. At this time, inter-axis phase differences of signals that are two symbols apart are distributed approximately from -0.1π to 0.1π, and are not fixed. For signals that are sixteen symbols apart, the phase relationships are always zero, but a tap length of an adaptive filter is generally shorter than sixteen symbols, and hence the FIR filter does not provide a response. Therefore, the amplitude r does not become constant in the condition in which the delay interference occurs, and does not converge to the condition in which the delay interference occurs even when the CMA is used.

Note that, in the above description, the clock phase modulation in the period of integer symbols is assumed, but the period does not need to be integer symbols. In addition, timing with the data modulation does not need to be managed. Further, a similar function, that is, the avoidance of the erroneous convergence of the CMA due to the randomizing of the optical signals can be realized by performing not only the long-period clock-phase modulation but also random phase modulation or frequency modulation in the optical signal randomizer 602.

The decoder 805 performs decoding processing in accordance with a BPSK coding rule of the X-polarization I/Q modulator 603. When the BPSK signals are DBPSK encoded, differential decoding or the differential detection is performed. The decoder 806 performs decoding processing in accordance with a BPSK coding rule of the Y-polarization I/Q modulator 604. When the BPSK signals are DBPSK encoded, the differential decoding or the differential detection is performed.

As described above, in this embodiment, the phases of the transmission optical signals are randomized, with the result that, even in a case where the CMA is applied to the BPSK signals, the erroneous convergence of the adaptive equalization on the reception side can be avoided, and a stable communication state can be maintained.

### Industrial Applicability

As described above, the optical transmission scheme according to the present invention is useful for the long-distance optical transmission system using the digital coherent system.

### Reference Signs List

100 optical transmitter, 101 light source, 102 phase modulator, 103 pulse carver, 104 data converter, 105 polarization-multiplexing I/Q modulator, 106 bit interleaver, 200 optical transmission path unit, 300 optical receiver, 301 coherent detector, 302 polarization splitter, 303 differential detector, 304 π/4 phase rotator, 401 X inversion controller, 402 X differential encoder, 403 X replicator, 404 XI inversion controller, 405 XQ inversion controller, 501 Y inversion controller, 502 Y differential encoder, 503 Y replicator, 504 YI inversion controller, 505 YQ inversion controller, 600 optical transmitter, 601 light source, 602 optical signal randomizer, 603 X-polarization I/Q modulator, 604 Y-polarization I/Q modulator, 605 polarization multiplexer, 700 optical transmission path unit , 800 optical receiver, 801 light source, 802 coherent detector, 803 amplitude adjuster and fixed equalizer, 804 polarization splitter and adaptive equalizer, 805 decoder, 806 decoder

## Claims

1. An optical transmission apparatus including:
- an optical transmitter (100, 600) having a plurality of modulation rules, and being configured to switch between the plurality of modulation rules to generate optical signals, multiplex the optical signals with orthogonal polarizations, and transmit the optical signals,
wherein each of the plurality of modulation rules subjects the optical signals to a π/4 shift at each clock cycle,
wherein the plurality of modulation rules are switched for each of the orthogonal polarizations,
- an optical receiver (300) for receiving said optical signals including:
a coherent detector (301) for causing interference between the received optical signals and local oscillation light, and converting the optical signals into electrical signals;
a polarization splitter and adaptive equalizer (302, 804) based on a constant modulus algorithm (CMA) for subjecting the electrical signals, which are input from the coherent detector (301), to polarization splitting; and
a differential detector (303) for performing differential detection on the electrical signals which are input from the polarization splitter and adaptive equalizer (302, 804),
wherein the plurality of modulation rules are switched with a switching speed at least ten time greater than a response speed of the polarization splitter and adaptive equalizer (302, 804) based on a constant modulus algorithm (CMA).

2. The optical apparatus according to claim 1, wherein the optical transmitter (100, 600) further randomizes (602) phases of the optical signals.

3. The optical apparatus according to claim 1, wherein the optical transmitter (100, 600) further comprising:
a phase modulator (102) for subjecting non-modulated optical signals, which are input from a light source, to phase modulation; and
a data modulator (105) for subjecting the optical signals, which are input from the phase modulator, to data modulation with data series which are input from an external.

4. The optical apparatus according to claim 3, wherein the phase modulator (102) performs π/4 phase switching in one symbol.

5. The optical apparatus according to claim 1, wherein the optical transmitter (100, 600) comprises:
an optical signal randomizer (602) for randomizing phases of non-modulated optical signals which are input from a light source; and
an X-polarization I/Q modulator (603) and a Y-polarization I/Q modulator (604) for subjecting the optical signals, which are input from the optical signal randomizer, to data modulation with data series which are input from an external.

6. The optical apparatus according to claim 3 or 4, wherein the data modulator (105) periodically switches between the plurality of modulation rules of the data modulation in units of symbols for each of the orthogonal polarizations.

7. The optical apparatus according to claim 1, wherein the plurality of modulation rules are settable individually for any one or all of polarizations, lanes, and frames, or wherein switching speed for the plurality of modulation rules is settable individually for any one or all of polarizations, lanes, and frames.

8. The optical apparatus to claim 1, wherein the plurality of modulation rules have a hierarchical structure, and have a plurality of modulation rules for each hierarchical level.

9. The optical apparatus according to claim 8, wherein switching speed for the plurality of modulation rules is set individually according to the hierarchical level.

10. The optical apparatus according to claim 3, wherein the data modulator (105) receives one series of input data, combines differential encoding, data replication, and inversion control to generate two series of output data, and performs orthogonal phase modulation with the two series of data.

11. The optical apparatus according to claim 2,
wherein the randomizing (602) of the phases of the optical signals is performed in a period that is equivalent to or more than a tap length of the polarization splitter and adaptive equalizer (302, 804).

12. The optical apparatus according to claim 11, wherein the randomizing (602) of the phases of the optical signals is performed by at least one of clock phase modulation and frequency modulation

13. An optical transmission method, comprising:
an optical transmission step (100, 600); and
an optical reception step (300),
wherein the optical transmission step (100) comprises: switching (102) between a plurality of modulation rules to generate optical signals; and multiplexing (105) the optical signals with orthogonal polarizations to generate transmission optical signals,
the optical reception step (300) comprises: performing (301) coherent detection in which interference is caused between received optical signals, which are received from an external, and local oscillation light to convert the received optical signals into electrical signals; subjecting (302) the electrical signals after the coherent detection to polarization splitting; and performing (303) differential detection on the electrical signals after the polarization splitting, and
wherein each of the plurality of modulation rules subjects the optical signals to a π/4 shift at each clock cycle,
wherein the plurality of modulation rules are switched for each of the orthogonal polarizations.

14. The optical transmission method according to claim 13, wherein the optical transmission step (100, 600) further comprises randomizing (602) phases of the optical signals.

## Patentansprüche

1. Optisches Übertragungsgerät, umfassend:
- einen optischen Sender (100, 600), der eine Vielzahl von Modulationsregeln aufweist, und konfiguriert ist, um zwischen der Vielzahl von Modulationsregeln umzuschalten, um optische Signale zu generieren, die optischen Signale mit orthogonalen Polarisationen zu multiplexen und die optischen Signale zu senden,
wobei jede der Vielzahl von Modulationsregeln die optischen Signale in jedem Taktzyklus einer π/4-Verschiebung unterzieht,
wobei die Vielzahl von Modulationsregeln für jede der orthogonalen Polarisationen umgeschaltet wird,
- einen optischen Empfänger (300) zum Empfangen der optischen Signale, umfassend:
einen kohärenten Detektor (301), um eine Interferenz zwischen den empfangenen optischen Signalen und einem lokalen Oszillationslicht zu bewirken und um die optischen Signale in elektrische Signale umzuwandeln;
einen Polarisationsteiler und adaptiven Entzerrer (302, 804) basierend auf einem Konstant-Modul-Algorithmus (CMA), um die elektrischen Signale, die von dem kohärenten Detektor (301) eingegeben werden, einer Polarisationsteilung zu unterziehen; und
einen Differentialdetektor (303), um eine Differentialdetektion an den elektrischen Signalen, die von dem Polarisationsteiler und dem adaptiven Entzerrer (302, 804) eingegeben werden, auszuführen,
wobei die Vielzahl von Modulationsregeln mit einer Schaltgeschwindigkeit umgeschaltet wird, die mindestens zehnmal so groß wie eine Reaktionsgeschwindigkeit des auf einem Konstant-Modul-Algorithmus (CMA) basienderden Polarisationsteilers und adaptiven Entzerrers (302, 804) ist.

2. Optisches Gerät nach Anspruch 1, wobei der optische Sender (100, 600) ferner die Phasen der optischen Signale randomisiert (602).

3. Optisches Gerät nach Anspruch 1, wobei der optische Sender (100, 600) ferner umfasst:
einen Phasenmodulator (102), um nicht modulierte optische Signale, die von einer Lichtquelle eingegeben werden, einer Phasenmodulation zu unterziehen; und
einen Datenmodulator (105), um die optischen Signale, die von dem Phasenmodulator eingegeben werden, einer Datenmodulation mit Datenreihen, die von außen eingegeben werden, zu unterziehen.

4. Optisches Gerät nach Anspruch 3, wobei der Phasenmodulator (102) eine π/4-Phasenumschaltung in einem Symbol ausführt.

5. Optisches Gerät nach Anspruch 1, wobei der optische Sender (100, 600) umfasst:
einen optischen Signal Randomizer (602), um die Phasen von nicht modulierten optischen Signalen, die von einer Lichtquelle eingegeben werden, zu randomisieren; und
einen X-Polarisations-I/Q-Modulator (603) und einen Y-Polarisations-I/Q-Modulator (604), um die optischen Signale, die von dem optischen Signal Randomizer eingegeben werden, einer Datenmodulation mit Datenreihen, die von außen eingegeben werden, zu unterziehen.

6. Optisches Gerät nach Anspruch 3 oder 4, wobei der Datenmodulator (105) periodisch zwischen der Vielzahl von Modulationsregeln der Datenmodulation in Symboleinheiten für jede der orthogonalen Polarisationen umschaltet.

7. Optisches Gerät nach Anspruch 1, wobei die Vielzahl von Modulationsregeln für eines oder alle von Polarisationen, Strängen und Rahmen individuell einstellbar ist, oder wobei die Schaltgeschwindigkeit für die Vielzahl von Modulationsregeln für eines oder alle von Polarisationen, Strängen und Rahmen individuell einstellbar ist.

8. Optisches Gerät nach Anspruch 1, wobei die Vielzahl von Modulationsregeln eine hierarchische Struktur aufweist und eine Vielzahl von Modulationsregeln für jede Hierarchieebene aufweist.

9. Optisches Gerät nach Anspruch 8, wobei die Schaltgeschwindigkeit für die Vielzahl von Modulationsregeln gemäß der Hierarchieebene individuell eingestellt wird.

10. Optisches Gerät nach Anspruch 3, wobei der Datenmodulator (105) eine Reihe von Eingangsdaten empfängt, Differentialcodierung, Datenreplikation und Inversionssteuerung kombiniert, um zwei Reihen von Ausgangsdaten zu generieren, und eine orthogonale Phasenmodulation mit den beiden Datenreihen ausführt.

11. Optisches Gerät nach Anspruch 2, wobei das Randomisieren (602) der Phasen der optischen Signale in einer Periode ausgeführt wird, die gleich oder größer als eine Abgrifflänge des Polarisationsteilers und adaptiven Entzerrers (302, 804) ist.

12. Optisches Gerät nach Anspruch 11, wobei das Randomisieren (602) der Phasen der optischen Signale durch mindestens eine von einer Taktphasenmodulation und einer Frequenzmodulation erfolgt.

13. Optisches Übertragungsverfahren, umfassend:
einen optischen Sendeschritt (100, 600); und
einen optischen Empfangsschritt (300),
wobei der optische Sendeschritt (100) Folgendes umfasst: Umschalten (102) zwischen einer Vielzahl von Modulationsregeln, um optische Signale zu generieren; und Multiplexen (105) der optischen Signale mit orthogonalen Polarisationen, um optische Sendesignale zu generieren,
wobei der optische Empfangsschritt (300) Folgendes umfasst: Ausführen (301) einer kohärenten Detektion, bei der eine Interferenz zwischen empfangenen optischen Signalen, die von außen empfangen werden, und einem lokalen Oszillationslicht verursacht wird, um die empfangenen optischen Signale in elektrische Signale umzuwandeln; Unterziehen (302) der elektrischen Signale einer Polarisationsteilung nach der kohärenten Detektion; und Ausführen (303) einer Differentialdetektion an den elektrischen Signalen nach der Polarisationsteilung, und
wobei jede der Vielzahl von Modulationsregeln die optischen Signale in jedem Taktzyklus einer π/4-Verschiebung unterzieht,
wobei die Vielzahl von Modulationsregeln für jede der orthogonalen Polarisationen umgeschaltet wird.

14. Optisches Übertragungsverfahren nach Anspruch 13, wobei der optische Sendeschritt (100, 600) ferner das Randomisieren (602) der Phasen der optischen Signale umfasst.

## Revendications

1. Appareil de transmission optique comprenant :
- un émetteur optique (100, 600) ayant une pluralité de règles de modulation, et configuré pour commuter entre la pluralité de règles de modulation pour générer des signaux optiques, multiplexer les signaux optiques avec des polarisations orthogonales, et émettre les signaux optiques,
dans lequel chacune de la pluralité de règles de modulation soumet les signaux optiques à un déphasage de π/4 à chaque cycle d'horloge,
dans lequel la pluralité de règles de modulation sont commutées pour chacune des polarisations orthogonales,
- un récepteur optique (300) pour recevoir lesdits signaux optiques comprenant :
un détecteur cohérent (301) pour provoquer une interférence entre les signaux optiques reçus et la lumière d'oscillation locale, et convertir les signaux optiques en des signaux électriques ;
un séparateur de polarisation et égaliseur adaptatif (302, 804) basés sur un algorithme de module constant (CMA) pour soumettre les signaux électriques, qui sont délivrés par le détecteur cohérent (301), à une séparation de polarisation ; et
un détecteur différentiel (303) pour effectuer une détection différentielle sur les signaux électriques qui sont délivrés par le séparateur de polarisation et égaliseur adaptatif (302, 804),
dans lequel la pluralité de règles de modulation sont commutées avec une vitesse de commutation au moins dix fois supérieure à une vitesse de réponse du séparateur de polarisation et égaliseur adaptatif (302, 804) basés sur un algorithme de module constant (CMA).

2. Appareil optique selon la revendication 1, dans lequel l'émetteur optique (100, 600) répartit en outre de manière aléatoire (602) les phases des signaux optiques.

3. Appareil optique selon la revendication 1, dans lequel l'émetteur optique (100, 600) comprend en outre :
un modulateur de phase (102) pour soumettre les signaux optiques non modulés qui sont délivrés par une source de lumière, à une modulation de phase ; et
un modulateur de données (105) pour soumettre les signaux optiques, qui sont délivrés par le modulateur de phase, à une modulation de données avec des séries de données qui sont entrées à partir de l'extérieur.

4. Appareil optique selon la revendication 3, dans lequel le modulateur de phase (102) effectue une commutation de phase de π/4 dans chaque symbole.

5. Appareil optique selon la revendication 1, dans lequel l'émetteur optique (100, 600) comprend :
un dispositif de répartition aléatoire de signal optique (602) pour répartir de manière aléatoire les phases des signaux optiques non modulés qui sont délivrés par une source de lumière ; et
un modulateur I/Q de polarisation X (603) et un modulateur I/Q de polarisation Y (604) pour soumettre les signaux optiques, qui sont délivrés par le dispositif de répartition aléatoire de signal optique, à une modulation de données avec des séries de données qui sont entrées à partir de l'extérieur.

6. Appareil optique selon la revendication 3 ou 4, dans lequel le modulateur de données (105) commute périodiquement entre la pluralité de règles de modulation de la modulation de données par unités de symboles pour chacune des polarisations orthogonales.

7. Appareil optique selon la revendication 1, dans lequel la pluralité de règles de modulation peuvent être établies individuellement pour n'importe laquelle ou la totalité des polarisations, des voies et des trames, ou dans lequel la vitesse de commutation pour la pluralité de règles de modulation peut être établie individuellement pour n'importe laquelle ou la totalité des polarisations, des voies et des trames.

8. Appareil optique selon la revendication 1, dans lequel la pluralité de règles de modulation ont une structure hiérarchique, et il y a une pluralité de règles de modulation pour chaque niveau hiérarchique.

9. Appareil optique selon la revendication 8, dans lequel la vitesse de commutation pour la pluralité de règles de modulation est établie individuellement conformément au niveau hiérarchique.

10. Appareil optique selon la revendication 3, dans lequel le modulateur de données (105) reçoit une série de données d'entrée, combine un encodage différentiel, une duplication de données, et une commande d'inversion pour générer deux séries de données de sortie, et effectue une modulation de phase orthogonale avec les deux séries de données.

11. Appareil optique selon la revendication 2,
dans lequel la répartition aléatoire (602) des phases des signaux optiques est effectuée dans une période qui est équivalente à une longueur de coefficient ou plus du séparateur de polarisation et égaliseur adaptatif (302, 804).

12. Appareil optique selon la revendication 11, dans lequel la répartition aléatoire (602) des phases des signaux optiques est effectuée par au moins l'une d'une modulation de phase d'horloge et d'une modulation de fréquence.

13. Procédé de transmission optique, comprenant :
une étape d'émission optique (100, 600) ; et
une étape de réception optique (300),
dans lequel l'étape d'émission optique (100) comprend : la commutation (102) entre une pluralité de règles de modulation pour générer des signaux optiques ; et le multiplexage (105) des signaux optiques avec des polarisations orthogonales pour générer des signaux optiques d'émission,
l'étape de réception optique (300) comprend: l'exécution (301) d'une détection cohérente dans laquelle une interférence est provoquée entre les signaux optiques reçus, qui sont reçus à partir de l'extérieur, et la lumière d'oscillation locale pour convertir les signaux optiques reçus en des signaux électriques ; l'application (302) d'une séparation de polarisation aux signaux électriques après la détection cohérente ; et l'exécution (303) d'une détection différentielle sur les signaux électriques après la séparation de polarisation, et
dans lequel chacune de la pluralité de règles de modulation soumet les signaux optiques à un déphasage de π/4 à chaque cycle d'horloge,
dans lequel la pluralité de règles de modulation sont commutées à chacune des polarisations orthogonales.

14. Procédé de transmission optique selon la revendication 13, dans lequel l'étape d'émission optique (100, 600) comprend en outre la répartition aléatoire (602) des phases des signaux optiques.
